# EUROPEAN PATENT SPECIFICATION

(11) **EP 2 243 873 B1**
(45) Date of publication and mention of the grant of the patent: **29.08.2012**
(21) Application number: 09005671.4
(22) Date of filing: 22.04.2009
(51) Int. Cl.: D06F 37/20, F16F 7/09

(54) **Improved shock absorber particularly for washing and/or drying machines**
Verbesserter Stoßdämpfer, insbesondere für Waschmaschinen oder Wäschetrockner
Absorbeur de choc amélioré particulièrement pour machines à laver et/ou de séchage

(43) Date of publication of application: 27.10.2010
(73) Proprietor: Electrolux Home Products Corporation N.V., 1130 Brussel (BE)
(72) Inventor: Rigo, Flavio, 33080 Porcia (PN) (IT)
(74) Representative: Nardoni, Andrea

(56) References cited:
- EP-A- 0 027 753
- DE-A1- 2 406 144
- DE-U1- 9 203 397
- GB-A- 587 183
- GB-A- 2 279 968
- JP-A- 5 141 466

## Description

### FIELD OF THE INVENTION

. The present invention relates to an improved shock absorber and, in particular, to a shock absorber for tub and drum of a washing machine.

### BACKGROUND OF THE INVENTION

. A washing machine generally comprises a tub and drum assembly which includes a tub and, rotatably-mounted within the tub, a drum to receive clothes or other articles to be washed. During the machine's operating cycle, the drum is rotated at high speed to expel water centrifugally from the clothes. During acceleration in this so-called spin phase, when the clothes are forced against the cylindrical wall of the rotating drum, an out-of-balance condition often arises due to the clothes becoming unevenly distributed, causing vibration of the drum as it rotates. In order to prevent these vibrations being transmitted to the cabinet of the machine, normally the tub and drum assembly is mounted resiliently.

. However, at some spin speeds, particularly a range of speeds as the drum accelerates but prior to the drum reaching its top speed, the tub and drum assembly tends to oscillate with large amplitude: in order to restrict the amplitude of oscillation, the suspension system normally includes damping. At or near peak spin speeds, the amplitude of oscillation becomes small again and the damping is undesirable and contributes to the transmission of vibrations to the machine cabinet.

. It is common for the suspension system of washing machine tub and drum assemblies to comprise one or more suspension units which provide both resilience and damping. Such a kind of suspension system comprises a piston frictionally slidable in a tube and a coil disposed inside the tube and connected with one end to the head of the piston and with the other end to the closed end of the tube so that the spring provides resilient support for the tub and drum assembly, to inhibit vibrations being transmitted to the chassis of the machine, and the frictional engagement of the piston with the inner surface of the tube provides damping. During the work of the machine, the piston does not start to move until the force acting on it has developed sufficiently to overcome frictional engagement with the tube. Then, immediately the piston moves with deflection of the spring. It is to be noticed that under small and large amplitude of oscillations of the drum both the spring and the damper always work, once the frictional engagement is overcome.

. Accordingly to the above, both resilience and damping effects are produced independently from the load or the cycle of the washing machine so that the whole suspension system is always under stressed conditions.

. GB 2279968 discloses a suspension unit which comprises two opposed mounting elements, first and second spring elements operatively arranged between said mounting elements and damping means for damping cyclical deflections of said second spring element and arranged so that under small amplitude loading oscillations the first spring element deflects cyclically independently of said damping means and under larger amplitude loading oscillations cyclical deflections of the second spring element are damped by said damping means. As above, resilience and damping effects always occur and, further, the structure is complicated by the provision of a further spring element.

. EP 0027753 discloses a shock absorber similar to the one of GB 2279968 wherein a spring element is provided and anchored between the tub and drum assembly and a first mounting element mounted slidable onto a second mounting element in a damping manner. In response to small oscillations only the spring element works and in response to grater oscillations also the damper works. In this case, it has been noted that since the spring always works an amount of vibrations is always transmitted to the chassis of the washing machine.

JP 05-141466 A discloses a shock absorber for a washing machine wherein, when a rod performs a stroke that exceeds a fixed distance, a compression spring is compressed and its damping effect is added to that of a frictional damping means, the latter being the only damping means working when the rod performs a stroke shorter that said fixed distance. The structural arrangement of such shock absorber is however rather complicated.

### SUMMARY OF THE INVENTION

The technical problem faced by the present invention is thus to provide an improved shock absorber which is particularly effective in absorbing the vibrations of a washing machine during all its cycles, which does not transmit vibrations to the chassis and, at the same time, has a simple construction.

. Said problem is solved by a shock absorber comprising damper and elastic elements assembled in an advantageous manner, as reported in the attached claims.

### BRIEF DESCRIPTION OF THE DRAWINGS

. Further features and the advantages of the present invention will be more evident from the following description of one embodiment, given only by a nonlimiting example of the invention, with reference to the figures wherein:
- Figure 1 is a schematic lateral section view of a shock absorber according to the invention in a non-working condition;
- Figure 2 is a schematic lateral section view of the shock absorber of figure 1 in a first working condition;
- Figure 3 is a schematic lateral section view of the shock absorber of figure 1 in a second working condition.

### DETAILED DESCRIPTION OF THE INVENTION

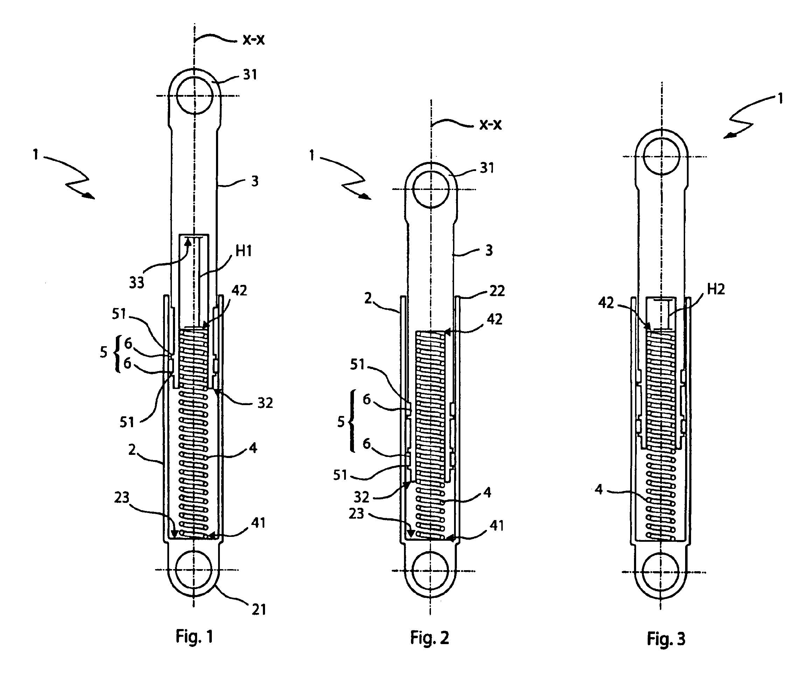

. With reference to Figures 1 to 3, the reference number 1 indicates a shock absorber according to the invention. The shock absorber 1 comprises a first tubular element 2 and a second tubular element 3 extending along a common longitudinal axis X-X, the second tubular element 3 being slidably inserted into the first tubular element 1.

. In particular, the first element 2 is provided with a first end 21 for fixing, for instance, to the chassis of a washing machine (not showed), a second end 22 opposite to said first end, open to slidably receive said second element 3. In correspondence of the first end 21, the bottom 23 of the cavity of said first element 2 is apt to firmly engage an end of a resilient member, as will be explained later.

. Similarly, the second element 3 is provided with a first end 31 for the connection with a tub and drum assembly (not shown and which comprises a drum rotatably arranged inside the tub) and a second end 32 opposite to said first end, which is slidable within the first element 2. The internal cavity of said second element 3 can be engaged by a resilient member 4, while the external surface of said second element is provided with frictionally damping means 5 mounted in respective seats 51 or positions along said surface so that to frictionally interact with the internal wall of the first element 2. It is to be noticed that the frictionally damping means 5 can alternately be provided on the internal surface of the first element 2. Further, the bottom 33 of the cavity of the second element 3 is so configured to act as abutment surface against which a resilient member can abut, as will be explained later.

. Preferably, the frictionally damping means 5 comprises one or more annular dampers 6 (for instance two are represented in the figures) separated along the surface of the second element 3. Further, said dampers are positioned in proximity of said second end 32 of the second element. It is to be noted that the dampers can be made of any material usually known in the art. For instance the frictionally damping means can be represented by friction linings, friction blocks or beds.

. The resilient member 4 comprises a first end 41 fixed on the bottom 23 of the cavity of the first element 2 and a second end 42 free to be engaged by the bottom 33 of the cavity of the second element 3. In particular, the second end 42 is positioned inside the cavity of said second element 3 and can be urged by the bottom of said cavity, as will be explained later on. It is to be noticed that this arrangement allows to guide the resilient member inside the shock absorber in a better controlled manner so that only axially deformation of the member are realized. This effect is particularly advantageous if the resilient member 4 comprises a spring and the spring has a relatively long extension.

. Preferably, when the washing machine does not work, the resilient member 4 is positioned inside the shock absorber 1 so that about half of its length is within the cavity of the second element 2 and so that at least the bottom portion of said cavity is free.

. The above described construction of the shock absorber according to the present invention works in a very advantageous way, as will be explained hereinafter.

. When the washing machine is empty before the laundry is loaded inside the drum and the washing liquor is let into the tub, the shock absorber 1 is in the rest position (figure 1), i.e. the second element 3 engages the first element 2 only at the level of their respective second ends 22 and 32. In other words, the first and second elements 2 and 3 are spaced away at a maximum distance one respect to the other so that the bottom 33 of the cavity of the second element 3 is far away from the second free end 42 of the resilient means 4 of a distance H1.

. Afterwards the laundry has been loaded inside the drum and the washing liquor (water and detergent) has been let into the tub, and a washing program is started, the drum begins to rotate inside the tub at low speed for carrying out the washing phase of the program, wherein the drum speed rotation is lower that 100 r.p.m to provides the better washing results. It is to be noticed that during this washing phase the shock absorber of washing machine is in a condition of "high load" due to the stresses generated by the weight of the laundry and the washing liquor and the tumbling effect of the laundry inside the drum caused by the low drum rotation speed. Due to the weight of the laundry and washing liquor and the low speed rotation, the tub is subjected to wide oscillations which cause the second element 3 of the shock absorber 1 to move into the first element 2 overcoming the friction force of the damping means 5. Therefore, in a short-starting-rotation phase of the washing cycle, the above distance H1 is totally annulled and, further, in an immediate subsequent phase, the second element 3 is forced to abut against and press the resilient member 4 (figure 2) (i.e. the resilient member 4 is stressed). Consequently, during the washing cycle, both the damping means 5 and the stressed resilient element 4 works to counteract and damp the sliding movement of the second tubular element 3 along the first tubular element 2, thereby damping the wide oscillations caused by the high load condition in the drum.

. On the contrary, after the washing liquor has been discharged so that the tub and drum assembly is less heavy, and a spinning phase is started wherein the drum rotates at least at 200/300 r.p.m or greater for extracting the water from the soaked laundry, the pressing force or stresses on the shock absorber decreases and, at the same time, the oscillations become shorter. It is to be noticed that during this spinning phase the shock absorber of washing machine is in a condition of "low load" due to the lower stresses generated by the laundry weight, which during the spinning phase continues to release further washing liquor thereby becoming even less heavy and due to the substantially absence of tumbling effect of the laundry inside the drum caused by the high drum rotation speed. In fact during the spinning phase the laundry substantially tends to adhere (to be fully retained on) to the inner surface of the drum. Consequently, the resilient means 4 returns to their rest position and only the frictionally damping element 5 works (figure 3) to damp the sliding movement of the second tubular element 3 along the first tubular element 2. It is to be noted that in the present low load condition the resilient means tend to return to their rest position also because conventional resilient holding means (not shown), which hold the tub and drum assembly from the top, tends to return to their rest position due to the lost of weight of the same assembly and the floating effect (centrifugal force effect) of the tub and drum assembly generated by the spinning drum speed. Moreover, in this condition, again a certain distance H2 between the bottom of the cavity of the second element 3 and the free end 42 of the resilient member 4 is created, which distance is however reduced respect to the above distance H1. In other words, the second element 3 moves away form the resilient element 4 so that the second end 42 of the resilient element 4 does not abut against the bottom 33 of said second element. In practise in response to such low load condition the second tubular element 3 does not engage and stress the resilient member 4, which therefore remains unstressed and it does not contribute to the damping effect of the second tubular element 3 movement along the first tubular element 2, which damping effect is due only to the frictionally damping means 5.

. It is now evident that the shock absorber according to the invention allows to avoid the dangerous and noisy vibrations transmitted by the conventional springs to the chassis of the washing machine. This advantage has been reached thanks to a very simple construction wherein the conventional resilient means and the damping element are actuated in conditions which are different with respect to the conventional ones.

. In fact, as stated above, during the washing phase both the resilient means and the damping element work together to damp the sliding movement of the second tubular element 3 along the first tubular element 2, while during the spinning phase only the damping element works.

. This particular construction indeed prevents the vibrations of the rotating tub and drum assembly to be transmitted to the chassis of the washing machine during the spinning phase and to reliably counteract the wide amplitude of oscillations raising during the washing phase.

. Moreover, the simple constructions allow to prolong the operation-life-time of the shock absorber just because the working components are few and their interactions are reduced at a minimum.

. It is also to be noticed that the shock absorber of the invention can be applied to a drier and to a washing/drier machine. It is evident that when the machine is in the drying cycle only the damper works. In particular, in a drying cycle the shock absorber of the washing and/or drying machine is in a low load condition wherein obviously only the wetted clothes are responsible of the weight of the tub and drum assembly and the drum rotates at low speed, usually being less than 100 r.p.m, but in this case the tumbling effect is negligible since the weight of the laundry loaded inside the drum is particularly low. Therefore, only the frictionally damping means 5 work to damp the sliding movement of the second tubular element 3 along the first tubular element 2, whereas the resilient member 4 is not engaged by the second tubular element 3 thereby remaining unstressed without contributing to the damping effect of the second tubular element movement.

. Therefore, all the drawbacks above mentioned with reference to the prior art have been overcome. In the meantime, several important advantages have been reached. In any case, further embodiments can be carried out, all nevertheless being included in the scope of the present invention as defined by the following claims. For instance, the shock absorber can be used for other appliances or devices where the same above inconveniences can arise, as stated above.

## Claims

1. Shock absorber (1) extending along a longitudinal axis (X-X) and comprising a first tubular element (2), a second tubular element (3) slidably inserted into the first tubular element (2), frictionally damping means (5) for frictionally controlling the sliding movement between said first (2) and second (3) elements, and a resilient member (4) positioned inside said shock absorber, **characterized in that** said resilient member (4) comprises a first end (41) fixed on a bottom (23) of a cavity of said first element (2) and a second end (42) positioned within a cavity formed in said second element (3), such that in response to a high load condition the second tubular element (3) engages and stresses said resilient member (4) by abutting the bottom (33) of the cavity formed in the second element (3) on the second end (42) of the resilient member (4) so that both the frictionally damping means (5) and the resilient member (4) damp the sliding movement of the second tubular element (3) along the first tubular element (2), in response to a low load condition the frictionally damping means (5) damp the sliding movement of the second tubular element (3) along the first tubular element (2) whereas the cavity bottom (33) is spaced apart from the second end (42) of the resilient member (4) thereby avoiding the second tubular element (3) to engage and stress said resilient member (4).

2. Shock absorber (1) according to claim 1, wherein in response to a high stress condition said second element (3) moves into said first element (2) until it abuts against said resilient member (4) and in response to a low stress condition said second element (3) moves into said first element (2) without abutting against said resilient member (4).

3. Shock absorber (1) according to claim 1 or 2, wherein the external surface of said second element (3) is provided with said frictionally damping means (5).

4. Shock absorber (1) according to any one of claims 1 to 3, wherein said frictionally damping means (5) comprises one or more annular dampers (6) separated along the surface of said second element (3).

5. Shock absorber (1) according to any one of claims 1 to 4, wherein said resilient member (4) comprises a first end (41) fixed on the bottom of the cavity of said first element (2) and a second end (42) free to be engaged by said second element (3).

6. Shock absorber (1) according to any one of claims 1 to 5, wherein said resilient member (4) comprises a spring.

7. Washing and/or drying machine comprising a washing assembly fixed to the bottom of a chassis of the machine by means of at least one of said shock absorber (1), the washing assembly comprising a drum rotatably arranged inside the tub, said shock absorber (1) extending along a longitudinal axis (X-X) and comprising a first tubular element (2), a second tubular element (3) slidably inserted into the first tubular element (2), frictionally damping means (5) for frictionally controlling the sliding movement between said first (2) and second (3) elements, and a resilient member (4) positioned inside said shock absorber, **characterized in that** said resilient member (4) comprises a first end (41) fixed on a bottom (23) of a cavity of said first element (2) and a second end (42) positioned within a cavity formed in said second element (3), such that in response to a high load condition the second tubular element (3) engages and stress said resilient member (4) by abutting the bottom (33) of the cavity formed in the second element (3) on the second end (42) of the resilient member (4) so that both the frictionally damping means (5) and the resilient member (4) damp the sliding movement of the second tubular element (3) along the first tubular element (2), in response to a low load condition the frictionally damping means (5) damp the sliding movement of the second tubular element (3) along the first tubular element (2) whereas the cavity bottom (33) is spaced apart from the second end (42) of the resilient member (4) thereby avoiding the second tubular element (3) to engage and stress said resilient member (4).

8. Washing and/or drying machine according to claim 7, wherein said high load condition occurs during a washing phase wherein the drum rotates at a speed of less than 100 r.p.m.

9. Washing and/or drying machine according to claim 7, wherein said low load condition occurs during a spinning phase wherein the drum rotates at a speed of greater than 200 r.p.m.

10. Washing and/or drying machine according to claim 7, wherein said low load condition occurs during a drying phase wherein the drum rotates at a speed of less than 100 r.p.m.

11. Washing and/or drying machine according to any one of the preceding claim 7-10, wherein the external surface of said second element (3) is provided with said frictionally damping means (5).

12. Washing and/or drying machine according to any one of the preceding claim 7-11, wherein said frictionally damping means (5) comprises one or more annular dampers (6) separated along the surface of said second element (3).

13. Washing and/or drying machine according to any one of the preceding claim 7-12, wherein said resilient member (4) comprises a spring.

## Patentansprüche

1. Stoßdämpfer (1), der sich entlang einer Längsachse (X-X) erstreckt und Folgendes umfasst: ein erstes rohrförmiges Element (2), ein zweites rohrförmiges Element (3), das gleitend in das erste rohrförmige Element (2) eingefügt ist, Reibungsdämpfungsmittel (5) zur reibschlüssigen Steuerung der Gleitbewegung zwischen dem ersten (2) und zweiten (3) Element, und ein elastisches Element (4), das innerhalb des Stoßdämpfers angeordnet ist, **dadurch gekennzeichnet, dass** das elastische Element (4) Folgendes umfasst: ein erstes Ende (41), das an einem Boden (23) eines Hohlraums des ersten Elements (2) befestigt ist, und ein zweites Ende (42), das in einem Hohlraum angeordnet ist, der in dem zweiten Element (3) gebildet ist, so dass als Reaktion auf einen Zustand mit hoher Last das zweite rohrförmige Element (3) eingefügt wird und das elastische Element (4) belastet, indem der Boden (33) des Hohlraums, der in dem zweiten Element (3) gebildet ist, gegen das zweite Ende (42) des elastischen Elements (4) stößt, so dass das Reibungsdämpfungsmittel (5) und das elastische Element (4) die Gleitbewegung des zweiten rohrförmigen Elements (3) entlang des ersten rohrförmigen Elements (2) dämpfen, wobei als Reaktion auf einen Zustand mit geringer Last die Reibungsdämpfungsmittel (5) die Gleitbewegung des zweiten rohrförmigen Elements (3) entlang des ersten rohrförmigen Elements (2) dämpfen, während der Boden (33) des Hohlraums von dem zweiten Ende (42) des elastischen Elements (4) beabstandet ist, wodurch verhindert wird, dass das zweite rohrförmige Element (3) in Eingriff mit dem elastischen Element (4) gelangt und es belastet.

2. Stoßdämpfer (1) nach Anspruch 1, wobei sich das zweite Element (3) als Reaktion auf einen Zustand mit hoher Belastung in das erste Element (2) hineinbewegt, bis es gegen das elastische Element (4) stößt, und wobei sich das zweite Element (3) als Reaktion auf einen Zustand mit geringer Belastung in das erste Element (2) hineinbewegt, ohne gegen das elastische Element (4) zu stoßen.

3. Stoßdämpfer (1) nach Anspruch 1 oder 2, wobei die Außenfläche des zweiten Elements (3) mit den Reibungsdämpfungsmitteln (5) versehen ist.

4. Stoßdämpfer (1) nach einem der Ansprüche 1 bis 3, wobei das Reibungsdämpfungsmittel (5) einen oder mehrere ringförmige Dämpfer (6) umfasst, die entlang der Oberfläche des zweiten Elements (3) voneinander getrennt angeordnet sind.

5. Stoßdämpfer (1) nach einem der Ansprüche 1 bis 4, wobei das elastische Element (4) Folgendes umfasst: ein erstes Ende (41), das am Boden des Hohlraums des ersten Elements (2) befestigt ist, und ein zweites Ende (42), das frei ist, um in Eingriff mit dem zweiten Element (3) gelangen zu können.

6. Stoßdämpfer (1) nach einem der Ansprüche 1 bis 5, wobei das elastische Element (4) eine Feder umfasst.

7. Wasch- und /oder Trockenmaschine, umfassend eine Wascheinheit, die durch mindestens einen Stoßdämpfer (1) am Boden eines Rahmens der Maschine befestigt ist, wobei die Wascheinheit Folgendes umfasst: eine Trommel, die drehbar in einem Laugenbehälter angeordnet ist, wobei sich der Stoßdämpfer (1) entlang einer Längsachse (X-X) erstreckt und Folgendes umfasst: ein erstes rohrförmiges Element (2), ein zweites rohrförmiges Element (3), das gleitend in das erste rohrförmige Element (2) eingefügt ist, Reibungsdämpfungsmittel (5) zur reibschlüssigen Steuerung der Gleitbewegung zwischen dem ersten (2) und zweiten (3) Element, und ein elastisches Element (4), das innerhalb des Stoßdämpfers angeordnet ist, **dadurch gekennzeichnet, dass** das elastische Element (4) Folgendes umfasst: ein erstes Ende (41), das an einem Boden (23) eines Hohlraums des ersten Elements (2) befestigt ist, und ein zweites Ende (42), das in einem Hohlraum angeordnet ist, der in dem zweiten Element (3) gebildet ist, so dass als Reaktion auf einen Zustand mit hoher Last das zweite rohrförmige Element (3) eingefügt wird und das elastische Element (4) belastet, indem der Boden (33) des Hohlraums, der in dem zweiten Element (3) gebildet ist, gegen das zweite Ende (42) des elastischen Elements (4) stößt, so dass das Reibungsdämpfungsmittel (5) und das elastische Element (4) die Gleitbewegung des zweiten rohrförmigen Elements (3) entlang des ersten rohrförmigen Elements (2) dämpfen, wobei als Reaktion auf einen Zustand mit geringer Last die Reibungsdämpfungsmittel (5) die Gleitbewegung des zweiten rohrförmigen Elements (3) entlang des ersten rohrförmigen Elements (2) dämpfen, während der Boden (33) des Hohlraums von dem zweiten Ende (42) des elastischen Elements (4) beabstandet ist, wodurch verhindert wird, dass das zweite rohrförmige Element (3) in Eingriff mit dem elastischen Element (4) gelangt und es belastet.

8. Wasch- und /oder Trockenmaschine nach Anspruch 7, wobei der Zustand mit hoher Last während einer Waschphase auftritt, bei der sich die Trommel mit einer Geschwindigkeit von weniger als 100 UpM dreht.

9. Wasch- und /oder Trockenmaschine nach Anspruch 7, wobei der Zustand mit geringer Last während einer Schleuderphase auftritt, bei der sich die Trommel mit einer Geschwindigkeit von mehr als 200 UpM dreht.

10. Wasch- und /oder Trockenmaschine nach Anspruch 7, wobei der Zustand mit geringer Last während einer Trocknungsphase auftritt, bei der sich die Trommel mit einer Geschwindigkeit von weniger als 100 UpM dreht.

11. Wasch- und /oder Trockenmaschine nach einem der vorhergehenden Ansprüche 7 - 10, wobei die Außenfläche des zweiten Elements (3) mit den Reibungsdämpfungsmitteln (5) versehen ist.

12. Wasch- und /oder Trockenmaschine nach einem der vorhergehenden Ansprüche 7 - 11, wobei das Reibungsdämpfungsmittel (5) einen oder mehrere ringförmige Dämpfer (6) umfasst, die entlang der Oberfläche des zweiten Elements (3) voneinander getrennt angeordnet sind.

13. Wasch- und /oder Trockenmaschine nach einem der vorhergehenden Ansprüche 7 - 12, wobei das elastische Element (4) eine Feder umfasst.

## Revendications

1. Amortisseur (1) s'étendant le long d'un axe longitudinal (X-X) et comprenant un premier élément tubulaire (2), un deuxième élément tubulaire (3) inséré de manière coulissante dans le premier élément tubulaire (2), des moyens d'amortissement par frottement (5) pour commander par frottement le déplacement coulissant entre lesdits premier (2) et deuxième (3) éléments, et un élément élastique (4) positionné à l'intérieur dudit amortisseur, **caractérisé en ce que** ledit élément élastique (4) comprend une première extrémité (41) fixée au fond (23) d'une cavité dudit premier élément (2) et une deuxième extrémité (42) positionnée dans une cavité formée dans ledit deuxième élément (3), de sorte que, en réponse à une condition de charge élevée, le deuxième élément tubulaire (3) vient en prise avec et contraint ledit élément élastique (4) en mettant en butée le fond (33) de la cavité formée dans le deuxième élément (3) sur la deuxième extrémité (42) de l'élément élastique (4) de sorte que les moyens d'amortissement par frottement (5) et l'élément élastique (4) amortissent tous deux le déplacement coulissant du deuxième élément tubulaire (3) le long du premier élément tubulaire (2), en réponse à une condition de faible charge, les moyens d'amortissement par frottement (5) amortissent le déplacement coulissant du deuxième élément tubulaire (3) le long du premier élément tubulaire (2) tandis que le fond de la cavité (33) est espacé de la deuxième extrémité (42) de l'élément élastique (4), évitant de ce fait que le deuxième élément tubulaire (3) vienne en prise avec et contraigne ledit élément élastique (4).

2. Amortisseur (1) selon la revendication 1, dans lequel, en réponse à une condition de contrainte élevée, ledit deuxième élément (3) se déplace dans ledit premier élément (2) jusqu'à ce qu'il soit en butée contre ledit élément élastique (4) et, en réponse à une condition de faible contrainte, ledit deuxième élément (3) se déplace dans ledit premier élément (2) sans venir en butée contre ledit élément élastique (4).

3. Amortisseur (1) selon la revendication 1 ou 2, dans lequel la surface extérieure dudit deuxième élément (3) est pourvue desdits moyens d'amortissement par frottement (5).

4. Amortisseur (1) selon l'une quelconque des revendications 1 à 3, dans lequel lesdits moyens d'amortissement par frottement (5) comprennent un ou plusieurs amortisseurs annulaires (6) séparés le long de la surface dudit deuxième élément (3).

5. Amortisseur (1) selon l'une quelconque des revendications 1 à 4, dans lequel ledit élément élastique (4) comprend une première extrémité (41) fixée sur le fond de la cavité dudit premier élément (2) et une deuxième extrémité (42) libre de venir en prise avec ledit deuxième élément (3).

6. Amortisseur (1) selon l'une quelconque des revendications 1 à 5, dans lequel ledit élément élastique (4) comprend un ressort.

7. Lave-linge et/ou sèche-linge comprenant un ensemble de lavage fixé au fond d'un châssis de la machine au moyen d'au moins l'un dudit amortisseur (1), l'ensemble de lavage comprenant un tambour agencé en rotation à l'intérieur de la cuve, ledit amortisseur (1) s'étendant le long d'un axe longitudinal (X-X) et comprenant un premier élément tubulaire (2), un deuxième élément tubulaire (3) inséré de manière coulissante dans le premier élément tubulaire (2), des moyens d'amortissement par frottement (5) pour commander par frottement le déplacement coulissant entre lesdits premier (2) et deuxième (3) éléments, et un élément élastique (4) positionné à l'intérieur dudit amortisseur, **caractérisé en ce que** ledit élément élastique (4) comprend une première extrémité (41) fixée sur un fond (23) d'une cavité dudit premier élément (2) et une deuxième extrémité (42) positionnée dans une cavité formée dans ledit deuxième élément (3), de sorte que, en réponse à une condition de charge élevée, le deuxième élément tubulaire (3) vient en prise avec et contraint ledit élément élastique (4) en venant en butée avec le fond (33) de la cavité formée dans le deuxième élément (3) sur la deuxième extrémité (42) de l'élément élastique (4) de sorte que les moyens d'amortissement par frottement (5) et l'élément élastique (4) amortissent tous deux le déplacement coulissant du deuxième élément tubulaire (3) le long du premier élément tubulaire (2), en réponse à une condition de faible charge, les moyens d'amortissement par frottement (5) amortissent le déplacement coulissant du deuxième élément tubulaire (3) le long du premier élément tubulaire (2) tandis que le fond de la cavité (33) est espacé de la deuxième extrémité (42) de l'élément élastique (4), évitant de ce fait que le deuxième élément tubulaire (3) vienne en prise avec et contraigne ledit élément élastique (4).

8. Lave-linge et/ou sèche-linge selon la revendication 7, dans lequel ladite condition de charge élevée apparaît pendant une phase de lavage dans laquelle le tambour tourne à une vitesse inférieure à 100 tr/mn.

9. Lave-linge et/ou sèche-linge selon la revendication 7, dans lequel ladite condition de faible charge apparaît pendant une phase d'essorage dans laquelle le tambour tourne à une vitesse supérieure à 200 tr/mn.

10. Lave-linge et/ou sèche-linge selon la revendication 7, dans lequel ladite condition de faible charge apparaît pendant une phase de séchage dans laquelle le tambour tourne à une vitesse inférieure à 100 tr/mn.

11. Lave-linge et/ou sèche-linge selon l'une quelconque des revendications 7 à 10 précédentes, dans lequel la surface extérieure dudit deuxième élément (3) est pourvue desdits moyens d'amortissement par frottement (5).

12. Lave-linge et/ou sèche-linge selon l'une quelconque des revendications 7 à 11 précédentes, dans lequel lesdits moyens d'amortissement par frottement (5) comprennent un ou plusieurs amortisseurs annulaires (6) séparés le long de la surface dudit deuxième élément (3).

13. Lave-linge et/ou sèche-linge selon l'une quelconque des revendications 7 à 12 précédentes, dans lequel ledit élément élastique (4) comprend un ressort.
